# EUROPÄISCHE PATENTSCHRIFT

(11) **EP 3 114 756 B1**
(45) Veröffentlichungstag und Bekanntmachung des Hinweises auf die Patenterteilung: **24.01.2018**
(21) Anmeldenummer: 15701369.9
(22) Anmeldetag: 28.01.2015
(51) Int. Cl.: H02K 11/21, H02K 9/19

(54) **ELEKTRISCHE MASCHINE MIT VON KÜHLFLUID DURCHSTRÖMTER HOHLWELLE**
ELECTRIC MACHINE WITH COOLING FLUID FLOW THROUGH A HOLLOW SHAFT
MACHINE ÉLECTRIQUE AVEC UN FLUIDE DE REFROIDISSEMENT COULANT À TRAVERS D'UN ARBRE CREUX

(30) Priorität: 06.03.2014 DE 102014204133
(43) Veröffentlichungstag der Anmeldung: 11.01.2017
(73) Patentinhaber: Robert Bosch GmbH, 70442 Stuttgart (DE)
(72) Erfinder: KNAPPENBERGER, Uwe, 75417 Muehlacker (DE); SCHWIDERSKI, Michael, 71679 Asperg (DE); KUEHBACHER, Daniel, 70569 Stuttgart (DE); GRULER, Benjamin, 71640 Ludwigsburg (DE)
(86) Internationale Anmeldenummer: PCT/EP2015/051666
(87) Internationale Veröffentlichungsnummer: WO 2015/132021

(56) Entgegenhaltungen:
- JP-A- H0 951 657
- US-A1- 2011 298 314

## Beschreibung

### Gebiet der Erfindung

Die vorliegende Erfindung betrifft eine elektrische Maschine und insbesondere eine elektrische Maschine, bei der der Rotor durch Kühlmittel, welches durch eine Hohlwelle des Rotors strömt, gekühlt wird.

### Stand der Technik

Elektrische Maschinen werden für vielfältige Einsatzzwecke als Motoren und/oder Generatoren eingesetzt. Insbesondere für Elektro- und Hybridfahrzeuge werden derzeit elektrische Maschinen entwickelt, welche eine hohe Leistungsabgabe ermöglichen sollen und gleichzeitig kleinbauend, leicht und effizient sein sollen.

Elektrische Maschinen bestehen generell aus einem statischen Stator und einem relativ zu diesem Stator drehbaren Rotor. Beim Betrieb der elektrischen Maschine treten Verlustleistungen auf, welche zu einer Erwärmung der elektrischen Maschine führen. Je nach Art der elektrischen Maschine tritt die Erwärmung dabei überwiegend im Stator oder überwiegend im Rotor auf, wobei zur Vermeidung von Schäden eine ausreichende Kühlung vorgesehen werden sollte. Beispielsweise bei Asynchronmaschinen tritt eine erhebliche Erwärmung innerhalb des Rotors auf, so dass auch diese rotierende Komponente geeignet gekühlt werden sollte.

Bei elektrischen Maschinen geringer Leistung erfolgt eine Kühlung häufig durch Durchströmen von Luft durch den Rotor. Bei leistungsstärkeren elektrischen Maschinen reicht eine solche Luftkühlung häufig nicht aus.

Es wurden deshalb elektrische Maschinen entwickelt, bei denen der Rotor mithilfe einer Kühlflüssigkeit gekühlt wird. Beispielsweise wird in der EP 0 921 623 A2 ein Elektromotor mit Läuferkühlung beschrieben, bei dem eine Welle des Elektromotors durch Durchströmen von Kühlflüssigkeit gekühlt wird.

Bei elektrischen Maschinen ist es ferner im Allgemeinen notwendig, eine Lage bzw. Drehzahl des Rotors genau zu kennen, um die elektrische Maschine korrekt ansteuern zu können. Hierzu wird meist an der Welle des Rotors ein Drehzahlsensor angeordnet

Aus der JP H09 51657 A und der US 2011/0298314 A1 ist eine elektrische Maschine gemäß dem Oberbegriff des Anspruchs 1 bekannt.

### Offenbarung der Erfindung

Ausführungsformen der vorliegenden Erfindung ermöglichen in vorteilhafter Weise eine elektrische Maschine, bei der einerseits die Welle eines Rotors geeignet gekühlt werden kann und bei der andererseits ein Drehzahlsensor in einfacher Weise und mit minimalem erforderlichem Bauraum montiert werden kann.

Gemäß einem Aspekt der Erfindung wird eine elektrische Maschine vorgeschlagen, die einen Rotor, einen Stator und einen Drehzahlsensor aufweist. Der Rotor weist hierbei eine Hohlwelle auf. Die elektrische Maschine ist dadurch gekennzeichnet, dass an dem Rotor mitrotierend eine Röhre angebracht ist, welche in einen Innenraum der Hohlwelle hineinragt, so dass durch die Röhre ein Kühlfluid in den Innenraum der Hohlwelle eingeströmt werden kann. Dabei ist der Drehzahlsensor mitrotierend an einem über die Hohlwelle überstehenden Bereich dieser Röhre angebracht.

Ideen zu Ausführungsformen der Erfindung können unter anderem als auf den nachfolgend beschriebenen Gedanken und Erkenntnissen beruhend angesehen werden:
Es wurde als vorteilhaft erkannt, die Welle eines Rotors als Hohlwelle auszubilden und durch das hohle Innere der Welle während des Betriebs der elektrischen Maschine ein Kühlfluid, beispielsweise eine Kühlflüssigkeit, zu strömen. Die gekühlte Hohlwelle kann dabei durch Wärmeleitung, wie sie in den typischerweise im Rotor verwendeten Metallmaterialien stark auftritt, den gesamten Rotor kühlen.

Es wurde ferner erkannt, dass Kühlfluid in das Innere der Hohlwelle vorteilhaft mithilfe einer Röhre eingebracht werden kann, die weit in dieses Innere hineinragt. Die Röhre kann dabei vorteilhafterweise einen Außendurchmesser aufweisen, der wesentlich geringer ist als ein Innendurchmesser der Hohlwelle. Beispielsweise kann die Röhre einen Außendurchmesser von weniger als 30 mm, vorzugsweise weniger als 20 mm und weiter bevorzugt weniger als 15 mm oder weniger als 10mm, aufweisen. Aufgrund dieses kleinen Außendurchmessers kann die Röhre beabstandet zu einer Wandung der Hohlwelle angeordnet werden, so dass sich zwischen einer Außenwandung der Röhre und einer Innenwandung der Hohlwelle ein vorzugsweise ringförmiger Spalt bildet, durch den Kühlfluid, welches in den Innenraum der Hohlwelle eingeströmt wurde, hin zu einer Ablassöffnung strömen kann.

Mithilfe einer solchen im Durchmesser im Vergleich zur Hohlwelle wesentlich kleineren Röhre kann somit Kühlfluid geeignet in das Zentrum des Innenraums der Hohlwelle eingeströmt werden. Von dort aus bewegt sich das Kühlfluid hin zu der im Betrieb der elektrischen Maschine rotierenden Wandung der Hohlwelle. Dort wird das Kühlfluid teilweise mitgerissen und beschleunigt, so dass es aufgrund von Zentrifugalkräften zu einer lokalen Druckerhöhung kommt, wodurch insgesamt eine Pumpwirkung erzielt wird, aufgrund derer Kühlfluid von der Röhre kommend durch den Innenraum der Hohlwelle hin zu der Ablassöffnung gefördert wird.

Die Tatsache, dass die Röhre typischerweise einen wesentlich kleineren Außendurchmesser aufweist als die Hohlwelle, wird ergänzend auch dafür genutzt, den für die elektrische Maschine notwendigen Drehzahlsensor einfach montieren zu können. Bei herkömmlichen elektrischen Maschinen wird ein solcher Drehzahlsensor üblicherweise direkt an der Hohlwelle montiert. Aufgrund des normalerweise großen Durchmessers der Hohlwelle von typischerweise deutlich mehr als 30 mm kann es dementsprechend erforderlich sein, entweder ausreichend groß dimensionierte Drehzahlsensoren zu montieren oder die Hohlwelle zumindest in einem dafür vorgesehenen Bereich mit einem entsprechend kleineren Außendurchmesser vorzusehen, um dann in diesem Bereich einen kleiner dimensionierten Drehzahlsensor montieren zu können.

Es wird nun vorgeschlagen, den Drehzahlsensor nicht mehr direkt an der Welle des Rotors selbst, sondern stattdessen an der in diese als Hohlwelle ausgebildete Welle hineinragenden Röhre anzubringen. Diese Röhre kann einerseits aus den oben beschriebenen Gründen und andererseits aufgrund der Tatsache, dass sie keine so große mechanische Belastung aushalten muss wie die Welle des Rotors selbst, mit einem kleinen Außendurchmesser realisiert sein, so dass an der Röhre einfach und platzsparend ein kleiner Drehzahlsensor montiert werden kann.

Die Röhre soll dabei derart an dem Rotor bzw. an dessen Hohlwelle angebracht sein, dass sie mit diesem/dieser mitrotiert, so dass ein Drehzahlsensor, der die Drehzahl bzw. Lage der Röhre detektieren kann, gleichzeitig auch die Drehzahl/Lage des Rotors misst.

Die in die Hohlwelle hineinragende Röhre kann einfach aufgebaut sein. Beispielsweise kann die Röhre ein hohles, zylindrisches Bauteil sein und entlang ihrer Länge einen einheitlichen Außendurchmesser aufweisen.

Ferner kann die Röhre einen Innendurchmesser von wenigstens 5 mm, vorzugsweise wenigstens 8 mm, aufweisen, so dass eine für eine ausreichende Kühlung des Rotors geeignete Menge von Kühlfluid in die Hohlwelle eingeströmt werden kann.

Die Röhre kann derart an dem Rotor, insbesondere an der Hohlwelle, befestigt sein, dass sie mit dem Rotor mitrotiert. Beispielsweise kann die Röhre lösbar oder unlösbar an der Welle befestigt sein. Insbesondere kann die Röhre an der Hohlwelle klemmend, verrastend, geschraubt, genietet, gelötet, geschweißt oder in anderer Weise befestigt sein. Die Befestigung der Röhre an der Hohlwelle bzw. an einem anderen Teil des Rotors kann dabei ausreichend starr und stabil ausgeführt sein, so dass die Röhre im Betrieb der elektrischen Maschine mit der gleichen Drehzahl rotiert wie der Rotor. Die Röhre kann beispielsweise über Stege an der Hohlwelle bzw. dem Rotor angebracht sein, so dass eine Strömung von Kühlfluid benachbart zu den Stegen entlang der Längsrichtung der Röhre und damit entlang der Innenwandung der Hohlwelle strömen kann, ohne dass die Strömung übermäßig von den Stegen gestört würde.

Der Drehzahlsensor ist geeignet ausgestaltet, um die Drehzahl bzw. die aktuelle Winkellage der Röhre zu messen. Der Drehzahlsensor kann dabei die Röhre beispielsweise ringförmig umgeben. Außenabmessungen des Drehzahlsensors können dabei beispielsweise kleiner als 50 mm sein.

Ein an der Röhre angebrachter mitrotierender Teil des Drehzahlsensors kann dabei verhältnismäßig klein und somit platzsparend ausgelegt sein und beispielsweise auf die Röhre aufgepresst oder in anderer Weise an dieser fixiert sein. Ein Innendurchmesser des Drehzahlsensors kann hierbei einem Außendurchmesser der Röhre entsprechen und kleiner als z.B. 20mm oder vorzugsweise kleiner als 10mm sein. Um den mitrotierenden Teil herum kann ein statischer Teil des Drehzahlsensors angeordnet sein, der dementsprechend auch klein dimensioniert sein kann und beispielsweise einen Außendurchmesser von weniger als 40mm aufweisen kann. Der gesamte Sensor kann somit platzsparend und kostengünstig sein.

Beispielsweise kann der Drehzahlsensor als Winkellagegeber z.B. in Form einer als Resolver dienenden zweiten elektrischen Maschine, als Potentiometergeber, als Inkrementalgeber oder als Absolutwertgeber implementiert sein.

In einer Ausgestaltung kann die elektrische Maschine mit einer Ablassöffnung an einer Stirnseite der Hohlwelle ausgebildet sein. Kühlfluid, welches durch die Röhre in den Innenraum der Hohlwelle eingeführt wird, kann, nachdem es Wärme von dem Rotor aufgenommen hat, aus diesem Innenraum durch eine solche Ablassöffnung entweichen. Beispielsweise kann das Kühlfluid von der Ablassöffnung kommend in ein Inneres eines die elektrische Maschine umgebenden Gehäuses entweichen und sich beispielsweise in einem sogenannten Sumpf ansammeln, von wo aus es abgepumpt bzw. rückgeführt werden kann. Die Ablassöffnung kann hierbei beispielsweise im Bereich eines Spalts zwischen einer Innenwandung der Hohlwelle und einer Außenwandung der Röhre ausgebildet sein.

Insbesondere in der zuvor beschriebenen Ausgestaltung mit einer Ablassöffnung an der Stirnseite der Hohlwelle kann es vorteilhaft sein, zwischen der Stirnseite der Hohlwelle und dem an der Hohlwelle angeordneten Drehzahlsensor ein Ablenkblech anzuordnen. Mithilfe eines solchen Ablenkblechs kann beispielsweise verhindert werden, dass aus der Ablassöffnung an der Stirnseite der Hohlwelle austretendes Kühlfluid den Drehzahlsensor erreicht und diesen eventuell schädigt. Mit anderen Worten kann das Ablenkblech den Drehzahlsensor vor an der Stirnseite der Hohlwelle austretendem Kühlfluid schützen.

In einer alternativen Ausgestaltung können an der Hohlwelle radial angeordnete Ablassöffnungen ausgebildet sein. Mit anderen Worten können Ablassöffnungen in einer Mantelfläche der im Regelfall zylindrischen Hohlwelle vorgesehen sein. Mithilfe solcher Ablassöffnungen kann Kühlfluid aus dem Inneren der Hohlwelle radial nach außen abgeleitet werden und somit ein Risiko, dass Kühlfluid den benachbart zu der Hohlwelle angeordneten Drehzahlsensor erreicht und eventuell schädigt, minimiert werden.

Das hierin beschriebene Konzept einer Kühlung einer Hohlwelle für eine elektrische Maschine sowie einer damit ermöglichten vorteilhaften Anordnung eines Drehzahlsensors an einer in die Hohlwelle ragenden Röhre kann besonders vorteilhaft im Falle von als Asynchronmaschine ausgebildeten elektrischen Maschinen genutzt werden. Bei solchen Asynchronmaschinen wird am Rotor besonders viel Wärme frei, so dass hier eine effiziente Wärmeableitung notwendig ist. Gleichzeitig sollte für eine präzise Detektierbarkeit der aktuellen Lage des Rotors bzw. Drehzahl des Rotors gesorgt sein und zu diesem Zweck ein Drehzahlsensor geeignet vorgesehen sein.

Es wird darauf hingewiesen, dass mögliche Merkmale und Vorteile einer erfindungsgemäßen elektrischen Maschine mit Bezug auf unterschiedliche Ausführungsformen der Erfindung beschrieben sind. Ein Fachmann erkennt, dass die beschriebenen Merkmale in geeigneter Weise kombiniert, ausgetauscht oder ersetzt werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Beschreibung noch die Zeichnungen als die Erfindung einschränkend auszulegen sind.
Fig. 1 zeigt einen Längsschnitt durch eine elektrische Maschine gemäß einer Ausführungsform der vorliegenden Erfindung.
Fig. 2 zeigt einen Querschnitt entlang der Fläche A-A aus Fig. 1.
Fig. 3 zeigt einen Längsschnitt durch eine elektrische Maschine gemäß einer weiteren Ausführungsform der vorliegenden Erfindung.
Fig. 4 zeigt einen Längsschnitt durch eine elektrische Maschine gemäß noch einer weiteren Ausführungsform der vorliegenden Erfindung.
Fign. 5 bis 7 veranschaulichen strukturelle Möglichkeiten zum Zuführen von Kühlfluid zu einer Röhre in einer elektrischen Maschine gemäß Ausführungsformen der vorliegenden Erfindung.

Die Figuren sind lediglich schematisch und nicht maßstabsgetreu. Gleiche Bezugszeichen bezeichnen in den verschiedenen Figuren gleiche bzw. gleich wirkende Merkmale.

### Ausführungsformen der Erfindung

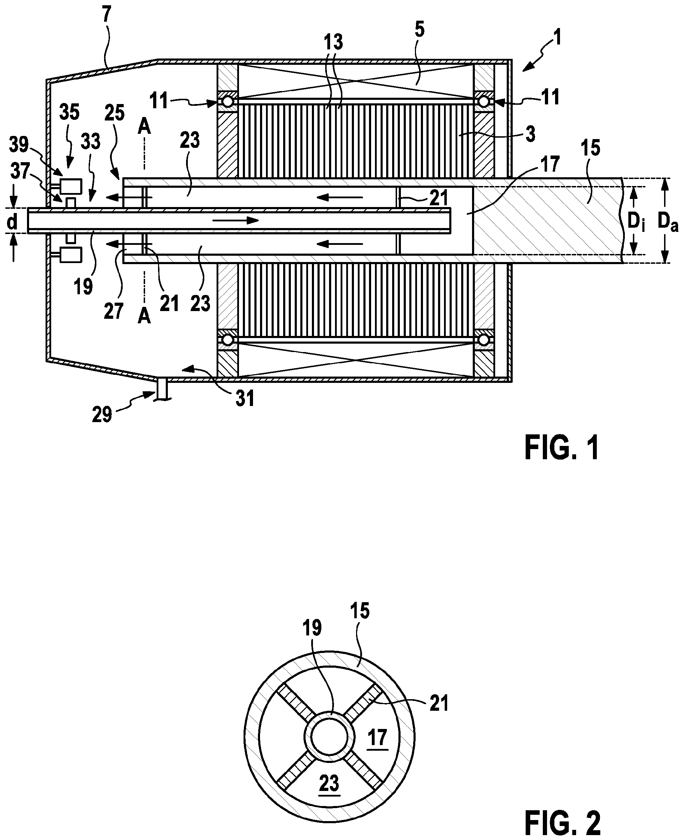

Fig. 1 zeigt einen Längsschnitt durch eine elektrische Maschine 1 gemäß einer Ausführungsform der vorliegenden Erfindung. Die elektrische Maschine 1 weist einen Rotor 3 und einen Stator 5 auf. Der Stator 5 ist fest in einem Gehäuse 7 montiert. Der Rotor 3 kann sich in Bezug auf den Stator 5 drehen und ist mithilfe von Kugellagern 9, 11 gelagert. Der Rotor 3 ist aus einer Vielzahl von Blechlamellen 13 zusammengesetzt, welche zu einem Lamellenpaket gestapelt sind. Im Zentrum dieses Lamellenpakets ist eine Hohlwelle 15 aufgenommen, welche drehfest mit dem Lamellenpaket verbunden ist. Zumindest in einem Bereich angrenzend an die Lamellen 13 ist diese Hohlwelle 15 hohl, das heißt mit einem Innenraum 17, ausgebildet. Die Hohlwelle 15 hat einen Außendurchmesser Dₐ von beispielsweise 40 mm.

Die elektrische Maschine 1 weist ferner eine Röhre 19 auf, welche derart an dem Rotor 3 angebracht ist, dass sie mit dem Rotor 3 mitrotiert. Beispielsweise kann die Röhre 19 über Stege 21 an einer Innenwandung der Hohlwelle 15 befestigt sein, wie dies in der in Fig. 2 dargestellten Schnittansicht entlang der Linie A-A aus Fig. 1 gezeigt ist. Die Stege 21 können einerseits mit der Röhre 19 und andererseits mit der Hohlwelle 15 beispielsweise durch eine Klemmverbindung, eine Klebeverbindung, eine Schweißverbindung, eine Lötverbindung, eine Schraubverbindung, eine Nietverbindung und/oder Ähnliches verbunden sein, so dass die Röhre 19 mit der Hohlwelle 15 mitrotiert.

Die Röhre 19 hat einen wesentlich kleineren Außendurchmesser d von beispielsweise 10 mm als der Außendurchmesser Dₐ der Hohlwelle und auch einen wesentlich kleineren Durchmesser d als ein Innendurchmesser Dᵢ des Hohlraums 17, so dass sich zwischen der Hohlwelle 15 und der Röhre 19 ein Spalt 23 bildet. Die Röhre 19 ragt in den Innenraum 17 der Hohlwelle 15 hinein.

Wie mit den Pfeilen in der Figur angedeutet, kann somit durch die Röhre 19 Kühlfluid in den Innenraum 17 eingeströmt werden. Die Röhre 19 reicht dabei von einer Stirnseite 25 der Hohlwelle 15 kommend bis in die Nähe des gegenüberliegenden Endes des Rotors 3 in den Hohlraum 17 hinein. Dementsprechend kann Kühlfluid, welches über die Röhre 19 eingeströmt wurde, wie mit den Pfeilen angedeutet, entlang im Wesentlichen der gesamten Oberfläche der Innenwandung der Hohlwelle 15 zurückströmen, dabei Wärme aus dem Rotor 3 aufnehmen und letztendlich im Bereich des Spalts 23 an der Stirnseite 25 der Hohlwelle 15 aus einer Art Ablassöffnung 27 ausströmen. Von der Ablassöffnung 27 kommend kann sich das Kühlfluid beispielsweise unten im Gehäuse 7 im Bereich eines Sumpfes 31 sammeln und von dort aus durch einen Stutzen 29 abgepumpt und gegebenenfalls rezirkuliert werden.

An einem über die Hohlwelle 15 überstehenden Bereich 33 der Röhre 19 ist ein Drehzahlsensor 35 vorgesehen. Der Drehzahlsensor 35 weist einen an der Röhre 19 angebrachten rotierenden Teil 37 und einen beispielsweise an dem Gehäuse 7 angebrachten statischen Teil 39 auf und ist dazu ausgelegt, die Lage bzw. Drehzahl der Röhre 19 zu bestimmen.

Beispielsweise kann der Drehzahlsonsor 35 als Resolver in Form einer zweiten elektrischen Maschine ausgebildet sein. Diese zweite elektrische Maschine weist als statischen Teil 39 einen Stator mit Wicklungen und als rotierenden Teil 37 einen Rotor, der als eine Metallscheibe mit unterschiedlichen Abständen ausgebildet ist, auf. Dadurch werden in Spulen des Stators Drehzahl- bzw. Winkel-abhängige Spannungen induziert. Eine Auswerteelektronik kann damit einen Rotorwinkel zum Stator bestimmen, der wiederum für das richtige Bestromen der richtigen Stators notwendig sein kann.

Alternativ kann der Drehzahlsensor 35 als Inkrementalgeber ausgebildet sein. Ein solcher Inkrementalgeber kann z.B. optisch arbeiten und beispielsweise Lücken oder andere optisch erfassbare Strukturen in relativ zueinander bewegten Komponenten detektieren. Zum Beispiel kann als rotierender Teil 37 eine Art Zahnrad dienen, deren Zähne bzw. Zahnlücken von einem als statischer Teil 39 dienenden optischen Sensor detektiert werden können, um hieraus auf eine Drehzahl bzw. Winkellage rückschließen zu können.

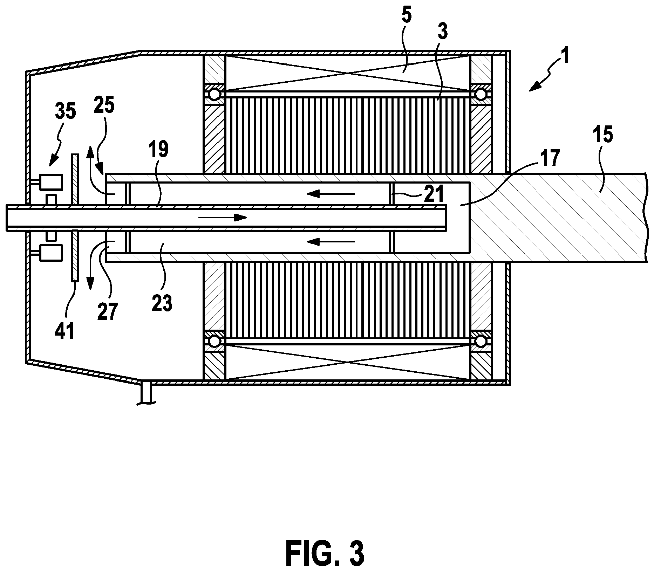

Fig. 3 zeigt einen Längsschnitt durch eine alternative Ausführungsform einer elektrischen Maschine 1. Dabei ist zwischen der Stirnseite 25 der Hohlwelle 15 bzw. der dort angrenzend vorgesehenen Ablassöffnung 27 und dem Drehzahlsensor 35 ein Ablenkblech 41 vorgesehen. Das Ablenkblech 41 ist an der Röhre 19 angebracht und ragt von dieser in radialer Richtung ab. Bei einer zylindrisch ausgebildeten Röhre 19 kann das Ablenkblech 41 beispielsweise in Form einer Kreisscheibe ausgebildet sein. Das Ablenkblech 41 kann somit verhindern, dass Kühlfluid von der Ablassöffnung 27 kommend direkt auf den Drehzahlsensor 35 strömt und diesen eventuell beschädigt. Stattdessen sorgt das Ablenkblech 41 dafür, dass eine Kühlmittelströmung, wie durch die Pfeile in Fig. 3 angedeutet, radial nach außen abgelenkt wird.

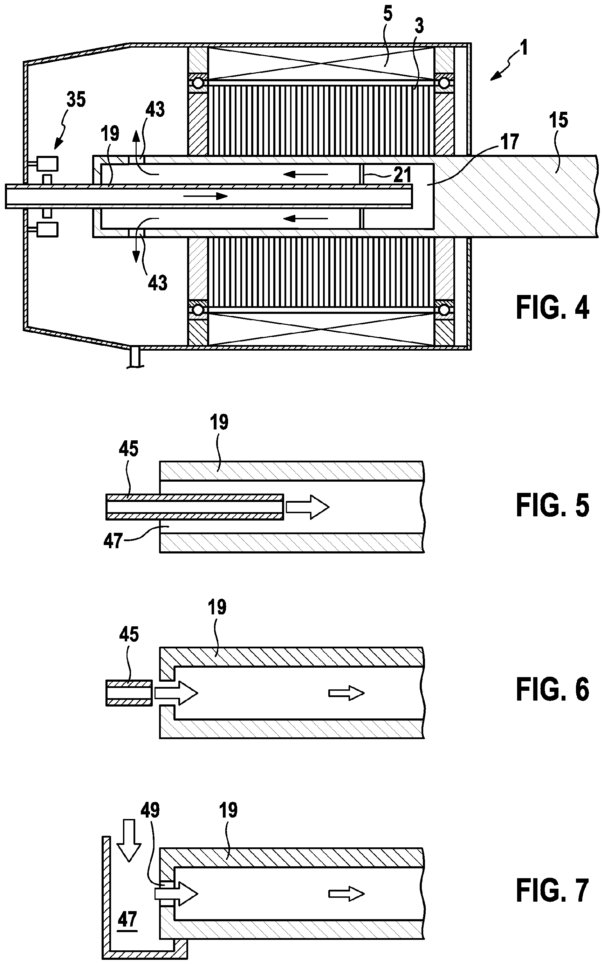

In Fig. 4 ist ein Längsschnitt durch eine alternative Ausführungsform einer elektrischen Maschine 1 dargestellt. Bei dieser Ausführungsform wird Kühlfluid nicht durch Ablassöffnungen an einer Stirnseite der Hohlwelle 15 abgelassen. Stattdessen sind an der Hohlwelle 15 im Bereich einer Mantelfläche radial angeordnete Ablassöffnungen 43 vorgesehen. Durch diese radial angeordneten Ablassöffnungen 43 ausströmendes Kühlfluid wird, wie durch die Pfeile in Fig. 4 angedeutet, radial nach außen abgegeben. Auf diese Weise kann vermieden werden, dass Kühlfluid direkt auf den Drehzahlsensor 35 trifft und diesen eventuell beschädigt.

Um beim Betrieb der elektrischen Maschine Reibungsverluste zu minimieren, kann es vorteilhaft sein, Kühlfluid in die Röhre 19 und damit letztendlich in die Hohlwelle 15 in einer Weise einzuführen, dass keine Dichtungen, welche Reibungsverluste erzeugen würden, notwendig sind. Hierzu kann beispielsweise, wie in Fig. 5 dargestellt, ein feststehendes Röhrchen 45 in das Innere der rotierbaren Röhre 19 hineinragen. Ein zwischen dem Röhrchen 45 und der Röhre 19 verbleibender Ringspalt 47 kann für eine ausreichende Abdichtung sorgen, so dass keine schleifende Dichtung nötig ist.

Alternativ kann, wie in Fig. 6 angedeutet, ein Röhrchen 45, welches nicht in die Röhre 19 ragt, in Form einer Düse ausgebildet sein, so dass eine Strömung von Kühlfluid durch diese Düse beschleunigt wird und zentral in das Innere der Röhre 19 mit erhöhter Geschwindigkeit injiziert wird. Hierbei sind weder eine Dichtung noch vorstehende Teile notwendig, so dass größere Herstellungstoleranzen akzeptiert werden können.

In einer weiteren in Fig. 7 angedeuteten Alternative kann an einem Ende der Röhre 19 ein Ölraum 47 vorgesehen sein, der als Reservoir für Kühlfluid dienen kann. Das Kühlfluid kann dabei von dem Ölraum 47 über eine Öffnung 49 an der Stirnseite der Röhre 19 zentral in die Röhre 19 eintreten. Die Öffnung 49 hat dabei einen kleineren Querschnitt als die Röhre 19. Aufgrund einer Rotation der Röhre 19 wird im Innern der Röhre 19 beim Betrieb der elektrischen Maschine 1 ein Unterdruck erzeugt, so dass Kühlfluid aus dem Ölraum 47 angesaugt wird. Eine Ölförderung ist dabei drehzahlabhängig.

## Patentansprüche

1. Elektrische Maschine (1), aufweisend:
einen Rotor (3);
einen Stator (5);
einen Drehzahlsensor (35);
wobei der Rotor (3) eine Hohlwelle (15) aufweist;
wobei an dem Rotor (3) eine Röhre (19) angebracht ist, welche in einen Innenraum (17) der Hohlwelle (15) hinein ragt, sodass durch die Röhre (19) ein Kühlfluid in den Innenraum (17) der Hohlwelle (15) eingeströmt werden kann;
**dadurch gekennzeichnet, dass**
die Röhre (19) mitrotierend an dem Rotor (3) angebracht ist und dass der Drehzahlsensor (35) mitrotierend an einem über die Hohlwelle (15) überstehenden Bereich (33) der Röhre (19) angebracht ist.

2. Elektrische Maschine nach Anspruch 1, wobei die Röhre (19) einen Außendurchmesser (d) von weniger als 30mm aufweist.

3. Elektrische Maschine nach Anspruch 1 oder 2, wobei die Röhre (19) einen Außendurchmesser (d) aufweist, der derart kleiner als ein Innendurchmesser Dᵢ der Hohlwelle (15) ist, dass sich zwischen einer Außenwandung der Röhre (19) und einer Innenwandung der Hohlwelle (15) ein Spalt (23) bildet, durch den Kühlfluid, welches in den Innenraum (17) der Hohlwelle (15) eingeströmt wurde, hin zu einer Ablassöffnung (27) strömen kann.

4. Elektrische Maschine nach einem der Ansprüche 1 bis 3, wobei die Röhre (19) entlang ihrer Länge einen einheitlichen Außendurchmesser (d) aufweist.

5. Elektrische Maschine nach einem der Ansprüche 1 bis 4, wobei der Drehzahlsensor (35) die Röhre (19) ringförmig umgibt.

6. Elektrische Maschine nach einem der Ansprüche 1 bis 5, wobei der Drehzahlsensor maximale Außenabmessungen von weniger als 50mm aufweist.

7. Elektrische Maschine nach einem der Ansprüche 1 bis 6, wobei die Röhre (19) einen Innendurchmesser von wenigstens 5mm aufweist.

8. Elektrische Maschine nach einem der Ansprüche 1 bis 7, wobei an einer Stirnseite (25) der Hohlwelle (15) eine Ablassöffnung (27) ausgebildet ist.

9. Elektrische Maschine nach einem der Ansprüche 1 bis 8, wobei zwischen einer Stirnseite (25) der Hohlwelle (15) und dem Drehzahlsensor (35) ein Ablenkblech (41) angeordnet ist.

10. Elektrische Maschine nach einem der Ansprüche 1 bis 9, wobei an der Hohlwelle (15) radial angeordnete Ablassöffnungen (43) ausgebildet sind.

11. Elektrische Maschine nach einem der Ansprüche 1 bis 10, wobei die elektrische Maschine als Asynchronmaschine ausgebildet ist.

## Claims

1. Electrical machine (1) having:
a rotor (3);
a stator (5);
a rotation speed sensor (35);
wherein the rotor (3) has a hollow shaft (15);
wherein a pipe (19) is fitted to the rotor (3), which pipe protrudes into an interior space (17) of the hollow shaft (15), so that a cooling fluid can flow into the interior space (17) of the hollow shaft (15) through the pipe (19);
**characterized in that**
the pipe (19) is fitted to the rotor (3) so as to rotate with it, and **in that** the rotation speed sensor (35) is fitted to a region (33) of the pipe (19), which region projects beyond the hollow shaft (15), so as to rotate with it.

2. Electrical machine according to Claim 1, wherein the pipe (19) has an outside diameter (d) of less than 30 mm.

3. Electrical machine according to Claim 1 or 2, wherein the pipe (19) has an outside diameter (d) which is smaller than an inside diameter Dᵢ of the hollow shaft (15) in such a way that a gap (23) forms between an outer wall of the pipe (19) and an inner wall of the hollow shaft (15), it being possible for cooling fluid which has flowed into the interior space (17) of the hollow shaft (15) to flow to an outlet opening (27) through the said gap.

4. Electrical machine according to one of Claims 1 to 3, wherein the pipe (19) has a uniform outside diameter (d) along its length.

5. Electrical machine according to one of Claims 1 to 4, wherein the rotation speed sensor (35) surrounds the pipe (19) in an annular manner.

6. Electrical machine according to one of Claims 1 to 5, wherein the rotation speed sensor has maximum external dimensions of less than 50 mm.

7. Electrical machine according to one of Claims 1 to 6, wherein the pipe (19) has an inside diameter of at least 5 mm.

8. Electrical machine according to one of Claims 1 to 7, wherein an outlet opening (27) is formed on an end side (25) of the hollow shaft (15).

9. Electrical machine according to one of Claims 1 to 8, wherein a metal deflecting plate (41) is arranged between an end side (25) of the hollow shaft (15) and the rotation speed sensor (35).

10. Electrical machine according to one of Claims 1 to 9, wherein radially arranged outlet openings (43) are formed on the hollow shaft (15).

11. Electrical machine according to one of Claims 1 to 10, wherein the electrical machine is in the form of an asynchronous machine.

## Revendications

1. Machine électrique (1), possédant :
un rotor (3) ;
un stator (5) ;
un capteur de vitesse de rotation (35) ;
le rotor (3) possédant un arbre creux (15) ;
un tube (19) étant monté sur le rotor (3), lequel fait saillie à l'intérieur d'un espace intérieur (17) de l'arbre creux (15) de sorte qu'un fluide de refroidissement puisse être injecté à travers le tube (19) dans l'espace intérieur (17) de l'arbre creux (15) ;
**caractérisée en ce que**
le tube (19) est monté en rotation solidaire sur le rotor (3) et **en ce que** le capteur de vitesse de rotation (35) est monté en rotation solidaire sur une zone (33) du tube (19) qui dépasse au-dessus de l'arbre creux (15).

2. Machine électrique selon la revendication 1, le tube (19) présentant un diamètre extérieur (d) inférieur à 30 mm.

3. Machine électrique selon la revendication 1 ou 2, le tube (19) présentant un diamètre extérieur (d) qui est inférieur à un diamètre intérieur Di de l'arbre creux (15) de telle sorte qu'entre une paroi extérieure du tube (19) et une paroi intérieure de l'arbre creux (15) se forme un interstice (23) à travers lequel le fluide de refroidissement qui est injecté dans l'espace intérieur (17) de l'arbre creux (15) peut s'écouler jusqu'à une ouverture d'expulsion (27).

4. Machine électrique selon l'une des revendications 1 à 3, le tube (19) présentant un diamètre extérieur (d) uniforme le long de sa longueur.

5. Machine électrique selon l'une des revendications 1 à 4, le capteur de vitesse de rotation (35) entourant le tube (19) en forme d'anneau.

6. Machine électrique selon l'une des revendications 1 à 5, le capteur de vitesse de rotation (35) présentant des dimensions extérieures maximales inférieures à 50 mm.

7. Machine électrique selon l'une des revendications 1 à 6, le tube (19) présentant un diamètre intérieur inférieur à 5 mm.

8. Machine électrique selon l'une des revendications 1 à 7, une ouverture d'expulsion (27) étant formée sur un côté frontal (25) de l'arbre creux (15).

9. Machine électrique selon l'une des revendications 1 à 8, un déflecteur (41) étant disposé entre un côté frontal (25) de l'arbre creux (15) et le capteur de vitesse de rotation (35).

10. Machine électrique selon l'une des revendications 1 à 9, des ouvertures d'expulsion (43) disposées radialement étant formées sur l'arbre creux (15).

11. Machine électrique selon l'une des revendications 1 à 10, la machine électrique étant réalisée sous la forme d'une machine asynchrone.
